# EUROPÄISCHE PATENTSCHRIFT

(11) **EP 0 456 906 B1**
(45) Veröffentlichungstag und Bekanntmachung des Hinweises auf die Patenterteilung: **19.10.1994**
(21) Anmeldenummer: 90124424.4
(22) Anmeldetag: 17.12.1990
(51) Int. Cl.: H04N 5/14

(54) **Verfahren zum Berechnen des Inhalts eines Zwischenbildes zu jeweils zwei aufeinanderfolgenden Monitorbildern**
Method for evaluating the contents of an intermediate picture for every two following monitor pictures
Méthode d'évaluation du contenu de l'image intermédiaire pour chaque succession de deux images de moniteur

(30) Priorität: 14.05.1990 DE 4015390
(43) Veröffentlichungstag der Anmeldung: 21.11.1991
(73) Patentinhaber: Nokia (Deutschland) GmbH, 75175 Pforzheim (DE)
(72) Erfinder: Ochs, Randolf, W-7516 Karlsbad (DE)

(56) Entgegenhaltungen:
- EP-A- 0 079 195
- EP-A- 0 341 769
- WO-A-88/00784
- GB-A- 2 144 301

## Beschreibung

### TECHNISCHES GEBIET

Die Erfindung betrifft ein Verfahren zum Berechnen des Inhalts eines Zwischenbildes von zwei aufeinanderfolgenden Monitorbildern. Derartige Verfahren werden z. B. für die HDTV-Übertragung benötigt, um für die Fernsehbilddarstellung ein Zwischenbild berechnen zu können, das zwischen zwei aufeinanderfolgend gesendeten Halbbildern liegt. Problematisch beim Berechnen des Inhalts von Zwischenbildern ist das Verhalten bewegter Flächen. Fliegt z. B. ein Ball von rechts nach links, muß er im Zwischenbild eine Lage einnehmen, die zwischen denjenigen liegt, die er in den beiden Halbbildern einnimmt. Es wird darauf hingewiesen, daß der Begriff "Zwischenbild" nicht darauf beschränkt ist, daß er ein Bild beschreibt, das zwischen zwei Halbbildern eingefügt wird. Es kann sich auch um ein anderes Bild handeln, das aus der Information von zwei beliebigen Bildern zusammengesetzt wird.

### STAND DER TECHNIK

Im Stand der Technik sind bisher unterschiedliche Vorgehensrichtungen, jede mit unterschiedlichen Detaillösungen, bekannt, um Probleme in den Griff zu bekommen, wie sie auftreten, wenn bewegte Bilder darzustellen sind.

Eine erste Lösungsrichtung geht dahin, generell festzustellen, ob Bewegung vorliegt. Hierzu wird für jeden Bildpunkt in zwei jeweils aufeinanderfolgenden Monitorbildern die Differenz der Helligkeiten berechnet. Solange die Summe der Differenzen unter einem Schwellenwert bleibt, werden die Bilder so behandelt, als liege gar keine Bewegung vor. Bei den einfachsten Verfahren werden als Zwischenbilder empfangende Bilder wiederholt, wobei die Bildfolge davon abhängt, ob Bewegung festgestellt wurde oder nicht. Bei einem verbeserten Verfahren, das in dieser Richtung arbeitet, wird in bewegten Bildbereichen das jeweils aktuelle Halbbild durch eine vertikale Interpolation zu einem Semivollbild ergänzt. In unbewegten Bildbereichen werden zwei jeweils aufeindanderfolgende Halbbilder gleichzeitig dargestellt.

Eine zweite Vorgehensrichtung besteht darin, jedes Monitorbild in eine Vielzahl von Blöcken aufzuteilen. In einem jeweils ersten Bild wird für jeden Block die Helligkeitsverteilung festgestellt, und es wird dann im darauffolgenden Bild mit Hilfe eines Korrelationsverfahrens nach demjenigen Block gesucht, der die im wesentlichen gleiche Helligkeitsverteilung aufweist. Es wird die Ortsdifferenz zwischen den Blöcken berechnet, und mit Hilfe dieser Ortsdifferenz wird der Inhalt eines Zwischenbildes berechnet.

Gemäß einer dritten Vorgehensrichtung wird jedem einzelnen Bildelement eines Bildes sogenannte Segmentinformation zugeordnet, die angibt, ob das Element unbewegt ist, bewegt ist, ob es zuvor verdeckt war oder ob es im nächsten Bild verdeckt sein wird. Hierzu müssen die Inhalte von drei Bildern miteinander verglichen werden und die Segmentinformation muß für jedes einzelne Element berechnet werden, zusammen mit Verschiebeinformation, die angibt, wie weit ein bewegtes Bildelement verschoben wird. Diese Vorgehensweise wird z. B. bei einem Verfahren eingesetzt, wie es in EP-A-0 154 125 beschrieben ist. Das Verfahren arbeitet mit jeweils drei aufeinanderfolgenden Vollbildern.

Die Verfahren, die in der ersten Vorgehensrichtung arbeiten, berechnen im Fall bewegter Bildinhalte entweder gar kein Zwischenbild oder nur eines relativ unzufriedenstellender Qualität. Die Verfahren gemäß der zweiten und dritten Vorgehensrichtung sind äußerst rechenaufwendig. Angesichts dieser Nachteile bestand dauernd das Problem, ein Verfahren zum Berechnen des Inhalts eines Zwischenbildes zu jeweils zwei aufeinanderfolgenden Monitorbildern anzugeben, das mit verringertem Rechenaufwand arbeitet, aber dennoch Zwischenbilder zufriedenstellender Qualität liefert. Vorzugsweise sollen die aufeinanderfolgenden Bilder Halbbilder sein.

### DARSTELLUNG DER ERFINDUNG

Das erfindungsgemäße Verfahren zum Berechnen des Inhalts eines Zwischenbildes zu jeweils zwei aufeinanderfolgenden Monitorbildern arbeitet so, daß
a) für jeden Bildpunkt die Differenz der Helligkeiten in den aufeinanderfolgenden Bildern berechnet wird,
b) Zeile für Zeile im ersten der beiden Bilder untersucht wird, ob die berechnete Differenz der Helligkeiten jeweils einen Schwellenwert übersteigt, und dann, wenn dies der Fall ist, ein linker Zeilenpunkt als Anfang eines bewegten Bereichs klassifiziert wird, wenn an einer vorgegebenen Anzahl benachbarter Bildpunkte links daneben der Schwellenwert nicht überschritten wird, wohingegen ein rechter Zeilenpunkt als Ende eines bewegten Bereichs klassifiziert wird, falls rechts daneben der Schwellenwert bei einer vorgegebenen Anzahl von Bildpunkten nicht überschritten wird,
c) die Untersuchung gemäß Pkt. b) entsprechend für das zweite Bild ausgeführt wird,
d) in einem der beiden Bilder Zeile für Zeile am gemäß Pkt. b) bestimmten Anfangs- und/oder Endpunkt die Helligkeitsverteilung innerhalb eines vorgegebenen Probebereichs erfaßt wird,
e) im anderen Bild innerhalb eines vorgegebenen Suchbereichs nach im wesentlichen derselben Helligkeitsverteilung um einen Anfangs- und/oder Endpunkt gesucht wird, wie sie im vorgenannten Bild innerhalb des Probebereichs vorliegt, und
f) die Ortsdifferenz zwischen den beiden in den Schritten d) und e) ermittelten Punkten berechnet wird und mit Hilfe dieser Ortsdifferenz der Inhalt eines Zwischenbildes berechnet wird.

Beim erfindungsgemäßen Verfahren erfolgt der Helligkeitsvergleich zur Bewegungsanalyse nicht mehr in einem festgelegten Raster über die Gesamtfläche von Bildern, sondern dieser sehr rechenaufwendige Helligkeitsvergleich wird nur in solchen Probebereichen ausgeführt, für die zuvor festgestellt wurde, daß in ihnen die Kante zwischen einem bewegten Bereich und dem an diesen angrenzenden unbewegten Bereich liegt. Es ist offensichtlich, daß der Rechenaufwand aufgrund dieser Maßnahme enorm gesenkt werden kann. Diese enorme Einsparung an Rechenzeit ermöglicht es, etwas mehr Rechenzeit in die Detailuntersuchung der Bewegung einer Kante zu investieren. Dadurch ist es möglich, mit insgesamt weit verringerter Rechenzeit Zwischenbilder verbesserter Bildqualität zu berechnen.

Gemäß Schritt f) wird die Ortsdifferenz zwischen den beiden in den Schritten d) und e) ermittelten Punkten berechnet und mit Hilfe dieser Ortsdifferenz wird der Inhalt eines Zwischenbildes berechnet. In der Regel erfolgt das Berechnen des Inhalts eines Zwischenbildes noch mit Hilfe weiterer Ortsidfferenzen. Dies, weil bei der Bewegung eines Gegenstandes viele komplizierte Sonderfälle auftreten können, was es erforderlich macht, mit Hilfe verschiedener Ortsdifferenzen zu überprüfen, wo ein bestimmter Punkt wohl in einem Zwischenbild zu liegen hat. So kann sich ein Gegenstand von Bild zu Bild um mehr als seine Breite oder um weniger als seine Breite verschieben, oder er kann sich hinter einem feststehenden Gegenstand vorbeibewegen. Ist letzteres der Fall, ist es z. B. möglich, daß der Probebereich des einen Bildes im anderen Bild gar nicht mehr aufgefunden wird, weil der zugehörige Bereich des sich bewegenden Gegenstandes dort von einem feststehenden Gegenstand verdeckt ist. Es muß dann mit Hilfe eines anderen Probebereichs nach der Bewegung des Gegenstandes gesucht werden, z. B. mit Hilfe eines Probebereichs, der innerhalb einer Zeile an der anderen Kante des bewegten Bereichs zum unbewegten Bereich liegt, oder gar mit Hilfe eines Punktes im Inneren des bewegten Bereiches. Um den Rechenaufwand insgesamt so gering wie möglich zu halten, ist es von Vorteil, die Größe eines Probebereichs abhängig von seiner Wichtigkeit zu wählen. Handelt es sich nur um einen Bereich, der zu Kontrollzwecken genutzt wird, wird er möglichst klein gewählt, z. B. als Kreuz mit einer Ausdehnung von jeweils 3 Punkten in Zeilenrichtung um einen Punkt und jeweils zwei Zeilen in vertikaler Richtung, so daß insgesamt ein Bereich von 7 Bildpunkten in Zeilenrichtung und 5 Zeilen in Spaltenrichtung vorliegt. Ein Probebereich, der dagegen zur Ausgangsberechnung dient, wird vorteilhafterweise größer gewählt, z. B. ebenfalls kreuzförmig mit 13 Bildpunkten in Zeilenrichtung und 7 Bildpunkten in Spaltenrichtung.

Werden als Monitorbilder Halbbilder verwendet, werden vor dem Ausführen von Schritt a) die Punkte in einem der Halbbilder jeweils um eine Zeile verschoben, um den durch Übertragungsnormen bedingten Zeilenversatz zwischen zwei aufeinanderfolgenden Halbbildern auszugleichen. Es wird darauf hingewiesen, daß diese Vorgehensweise nicht nur beim Verfahren gemäß Anspruch 1 einsetzbar ist, sondern bei allen Verfahren zum Berechnen des Inhalts eines Zwischenbildes zu jeweils zwei aufeinanderfolgenden Monitorbildern, wenn als Monitorbilder Halbbilder verwendet werden. Dadurch wird vermieden, daß Punkte als bewegt klassifiziert werden, obwohl dies gar nicht der Fall ist, sondern nur Helligkeitsänderungen aufgrund des Zeilenversatzes den Ausschlag für die genannte Beurteilung geben.

### ZEICHNUNG

Fig. 1a - f: schematische Darstellungen von Bildinhalten, wie sie bei einem Verfahren zum Berechnen des Inhalts eines Zwischenbildes zu jeweils zwei aufeinanderfolgenden Monitorbildern eine Rolle spielen;
Fig. 2a - e und 3a - e: zwei Sätze zueinander korrelierter schematischer Darstellungen von Bildinhalten zum Erläutern von Bewegungsabläufen, die es erforderlich machen, die Inhalte mehrerer aufeinanderfolgender Monitorbilder auszuwerten.

### WEGE ZUM AUSFÜHREN DER ERFINDUNG

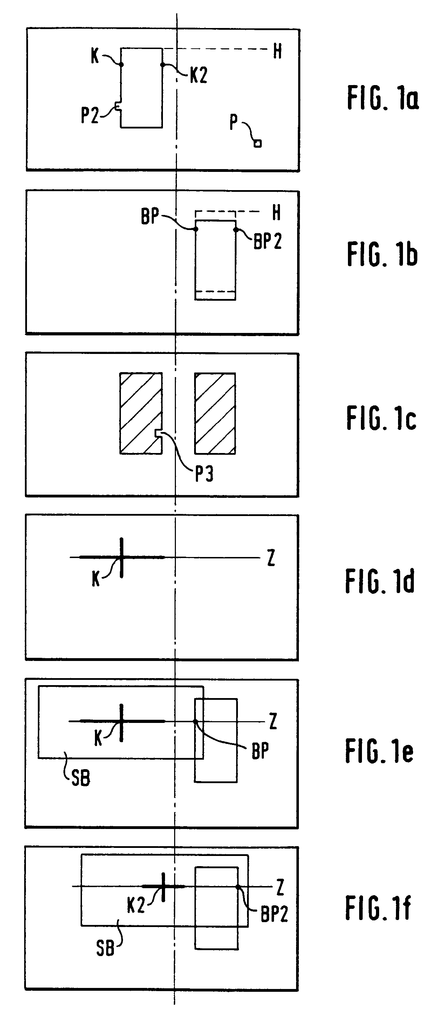

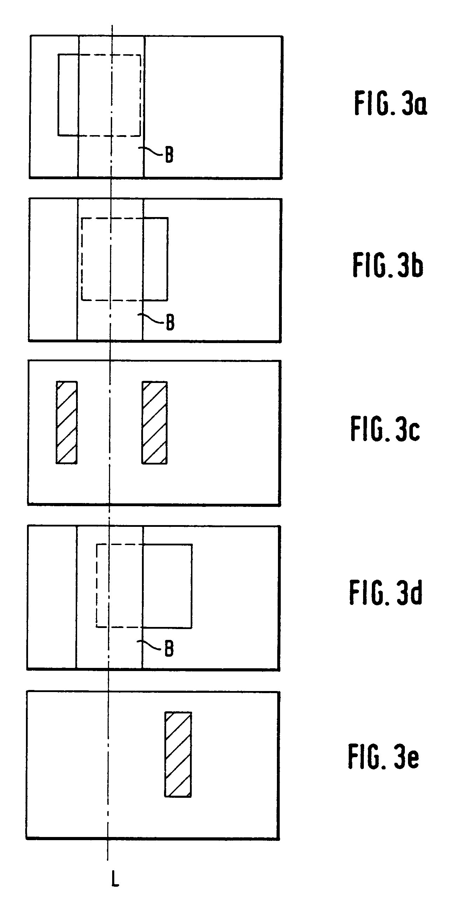

Die Fig. 1a, b und d - f sowie 2 und 3, jeweils a, b und c zeigen einen Bildinhalt mit unbewegtem Hintergrund und einem sich vor diesem bewegenden Rechteck. In den Fig. 3a, b und c ist zusätzlich ein feststehender Balken B eingezeichnet, hinter dem das Rechteck durchläuft. Der Hintergrund ist z. B. rot, das Rechteck blau und der Balken gelb.

Im folgenden wird davon ausgegangen, daß die genannten Bilddarstellungen Halbbildern eines Fernsehbildes entsprechen.

Im Halbbild gemäß Fig. 1a befindet sich das blaue Rechteck links von einer Bezugslinie L, während es sich im darauffolgenden Halbbild gemäß Fig. 1b rechts von dieser Bezugslinie befindet. Es ist angenommen, daß es sich auf konstanter Höhe H bewegt. Im Halbbild gemäß Fig. 1b liegt das Rechteck dann jedoch um einen ganzen Zeilenabstand nach unten verschoben. Da diese Verschiebung keine Bewegung des Rechtecks wiederspiegelt, sondern mit dem fernsehtechnischen Darstellungsverfahren zu tun hat, wird die Lage des Rechtecks im Halbbild gemäß Fig. 1b rechnerisch in die Höhenlage des Rechtecks im Halbbild gemäß Fig. 1a bewegt. Diese Lage ist in Fig. 1b gestrichelt dargestellt. Wenn im folgenden von der Lage des Rechtecks im zweiten Halbbild gesprochen wird, wird darunter immer die korrigierte Lage verstanden. Die Korrektur erfolgt z. B. in bekannter Weise dadurch, daß der Bildinhalt aufeinanderfolgender Zeilen vertikal gemittelt wird. Sind die aufeinanderfolgenden Bilder Vollbilder statt Halbbilder, ist keine Korrektur der vertikalen Lage erforderlich.

Fig. 1c veranschaulicht Differenzen von Helligkeiten der Bildinhalte der Halbbilder gemäß den Fig. 1a und 1b. Die Bereiche mit Helligkeitsdifferenzen, im folgenden bewegte Bereiche genannt, sind schraffiert ausgefüllt. Es handelt sich zum einen um denjenigen Bereich, in dem sich im Halbbild gemäß Fig. 1a das Rechteck befand, wo es jedoch im Halbbild gemäß Fig. 1b nicht mehr liegt und andererseits um denjenigen Bereich, in dem das Rechteck im Halbbild gemäß Fig. 1b liegt, in dem es jedoch im Halbbild gemäß Fig. 1a noch nicht lag.

Beim Auswerten der Helligkeit können verschiedene Korrekturen vorgenommen werden. In Fig. 1a ist ein einzelner heller Punkt P eingezeichnet, der getrennt vom sich bewegenden Rechteck liegt. Wenn dieser Punkt P mit einer Helligkeit, die sich stark vom Hintergrund unterscheidet, nur jeweils maximal zwei Bildpunkte in horizontaler und/oder vertikaler Richtung ausgedehnt ist, wird er als Fehlinformation behandelt, und seine Helligkeit wird an die des Hintergrundes angepaßt. Gleiches gilt für Punkte innerhalb des sich bewegenden Rechtecks oder am Rand des Rechtecks (siehe P2 in Fig. 1a) oder für Punkte innerhalb des Helligkeits-Differenzbildes (siehe z. B. Punkt P3 in Fig. 1c).

Dem weiteren Verfahrensablauf liegt die Erkenntnis zugrunde, daß es zum Berechnen des Inhalts eines Zwischenbildes zu jeweils zwei aufeinanderfolgenden Bildern ausreicht, zu untersuchen, wie die Bewegung innerhalb bewegter Bereiche (siehe Fig. 1c) ablief und daß hierfür die Bewegung von Kanten zwischen bewegten und unbewegten Bereichen von besonderem Interesse ist.

Unter Ausnutzung dieser Erkenntnis wird im ersten Halbbild gemäß Fig. 1a Zeile für Zeile die Helligkeitsverteilung an denjenigen Orten untersucht, die Kanten im Helligkeitsdifferenz-Bild gemäß Fig. 1c entsprechen. In Fig. 1d ist eine Zeile Z eingetragen. Gleich für den Ort der ersten Kante im Helligkeitsdifferenz-Bild von links her kommend ergibt sich im Halbbild gemäß Fig. 1a eine erhebliche Änderung der Helligkeit. Dadurch ist geklärt, daß die am weitesten links liegende Kante der bewegten Bereiche von Fig. 1c von der Lage des Rechtecks im ersten Halbbild gemäß Fig. 1a herrührt. Hätte sich das Rechteck zwischen den Halbbildern der Fig. 1a und 1b statt von links nach rechts vielmehr von rechts nach links bewegt, wäre eine erhebliche Helligkeitsänderung im ersten Halbbild erst am Ort der dritten Kante von links im Helligkeitsdifferenz-Bild gemäß Fig. 1c festgestellt worden.

Wurde auf die ebengenannte Art und Weise die eben genannte Kante aufgrund der Helligkeitsänderung in Zeilenrichtung detektiert, wird auch noch die Helligkeitsverteilung in Spaltenrichtung erfaßt, was in Fig. 1d durch ein Kreuz veranschaulicht ist. Beim Ausführungsbeispiel wurden jeweils 6 Bildpunkte rechts und links vom detektierten Kantenpunkt K ausgewertet und jeweils drei Bildpunkte nach oben und unten ausgehend vom genannten Punkt.

Im nächsten Schritt gilt es, im Halbbild gemäß Fig. 1b denjenigen Bildpunkt BP (siehe Fig. 1e) wiederzufinden, dessen kreuzförmige Umgebung eine Helligkeitsverteilung aufweist, die im wesentlichen der kreuzförmigen Helligkeitsverteilung um den Kantenpunkt K herum entspricht. Hierzu wird im zweiten Halbbild gemäß Fig. 1b ein Suchbereich SB aufgespannt, wie er durch Fig. 1e veranschaulicht ist. Die Abmessungen dieses Suchbereichs SB sind beim Ausführungsbeispiel etwa doppelt so groß wie die Abmessungen des genannten Kreuzes, nämlich etwa jeweils 10 Bildpunkte in horizontaler Richtung und jeweils etwa 6 Bildpunkte in vertikaler Richtung, jeweils bezogen auf die Lage des Kantenpunktes K. Wird im zweiten Halbbild nach demjenigen Bildpunkt BP gesucht, um den herum eine im wesentlichen gleiche Helligkeitsverteilung vorliegt wie um den Kantenpunkt K herum, wird zweckmäßigerweise mit der Suche mit Punkten begonnen, die auf einer Kantenlinie des Helligkeitsdifferenz-Bildes gemäß Fig. 1c liegen. So wird recht schnell der in Fig. 1e eingezeichnete Bildpunkt BP aufgefunden.

Die Ortsdifferenz zwischen dem Kantenpunkt K und dem aufgefundenen Bildpunkt BP mit im wesentlichen gleicher Helligkeitsverteilung gibt an, wie weit und in welcher Richtung der Kantenpunkt K von einem Halbbild zum anderen verschoben wurde. Wird nun ein Zwischenbild berechnet, wird der Kantenpunkt zum Konstruieren dieses berechneten Zwischenbildes nur um die halbe Strecke nach Betrag und Richtung gegenüber seiner Lage im ersten Halbbild verschoben.

Um die Verschiebung aller Punkte des bewegten Rechtecks ermitteln zu können, kann auf verschiedene Weisen vorgegangen werden. Die einfachste besteht darin, im ersten Halbbild gemäß Fig. 1a die Ausdehnung des Rechtecks aufgrund der Helligkeitsverteilung zu ermitteln und dann alle Punkte entsprechend der festgestellten Ortsdifferenz zwischen dem Kantenpunkt K und dem aufgefundenen Bildpunkt BP zu verschieben. Für die Praxis ist dieses einfache Verfahren nicht tragbar. Eine Verbesserung liegt darin, einen Kantenpunkt Zeile für Zeile festzustellen, wie oben beschrieben, den jeweils zugehörigen Bildpunkt BP zu suchen, und mit Hilfe dieser erweiterten Information das Zwischenbild zu erzeugen. Eine weitere Verbesserung liegt darin, nicht nur die Helligkeitsverteilung um den ersten Kantenpunkt von links her kommend im Halbbild gemäß Fig. 1a zu untersuchen, sondern auch um den zweiten Kantenpunkt K2 (siehe Fig. 1f ). Fig. 1f veranschaulicht mit Hilfe eines Kreuzes, daß auch um den zweiten Kantenpunkt K2 herum eine kreuzförmige Helligkeitsverteilung ermittelt wird. jedoch weist das Kreuz geringere Abmessungen auf als das in Fig. 1e um den Kantenpunkt K herum eingezeichnete. Es ist z. B. nur 11 Bildpunke in Zeilenrichtung lang und 5 Bildpunkte hoch. Dies, weil dieser Punkt nur zur Kontrollrechnung verwendet wird. Mit der Suche nach dem Bildpunkt BP2 kann unmittelbar mit einem Punkt begonnen werden, der durch Verschieben des Kantenpunktes K2 um denjenigen Weg erhalten wird, wie er aus der Ortsdifferenz zwischen dem Ort des Kantenpunktes K und dem Bildpunkt BP bekannt ist.

Das Aufsuchen eines Bildpunktes im zweiten Halbbild mit im wesentlichen gleicher Helligkeitsverteilung, wie sie um einen Kantenpunkt im ersten Halbbild vorliegt, erfolgte beim Ausführungsbeispiel mit Hilfe einer Kreuzkorrelationsrechnung. Diese Art der Verknüpfung hat nichts damit zu tun, daß von einer kreuzförmig ermittelten Helligkeitsverteilung ausgegangen wird, sondern damit, daß Ausgangsdaten und Zieldaten kreuzweise miteinander verknüpft werden. Das Berechnen einer Kreuzkorrelations-Funktion ist eine mathematisch bekannte Vorgehensweise.

Die Größe und Ausgestaltung des untersuchten Helligkeitsverteilungsgebietes um einen Kantenpunkt K und des Suchbereiches SB um einen solchen Punkt kann variabel sein. Z. B. läßt sich aus Vergleichen der Fläche eines bewegten Bereichs im Helligkeitsdifferenz-Bild gemäß Fig. 1c mit der Größe eines vermutlich zugehörigen Bereichs im ersten Halbbild gemäß Fig. 1a das Ausmaß einer Bewegung nach Größe und Richtung abschätzen, woraufhin Form und Größe des Helligkeitsverteilungsgebietes um einen Kantenpunkt K und Größe und Gestalt des Suchgebietes festgelegt werden können.

Nach Belieben gewählt werden kann die Definition für einen bewegten Bereich und die Definition für Punkte, die an die Umgebung anzupassen sind. Beim Ausführungsbeispiel wurde ein Bereich erst dann als bewegter Bereich anerkannt, wenn er in einer Richtung mindestens 3 Bildpunkte groß war. Kleinere Bereiche wurden an die Umgebung angepaßt. Ähnlich wurde mit Verschiebungsausreißern in Spaltenrichtung verfahren; das heißt, dann, wenn sich für einen Kantenpunkt eine Bewegungsänderung von mehr als zwei Bildpunkten gegenüber seinen in Spaltenrichtung benachbarten Kantenpunkten in jeweils derselben Richtung ergab, wurde die Bewegung dieses Kantenpunktes mit den Bewegungen der anderen Kantenpunkte gleichgestellt.

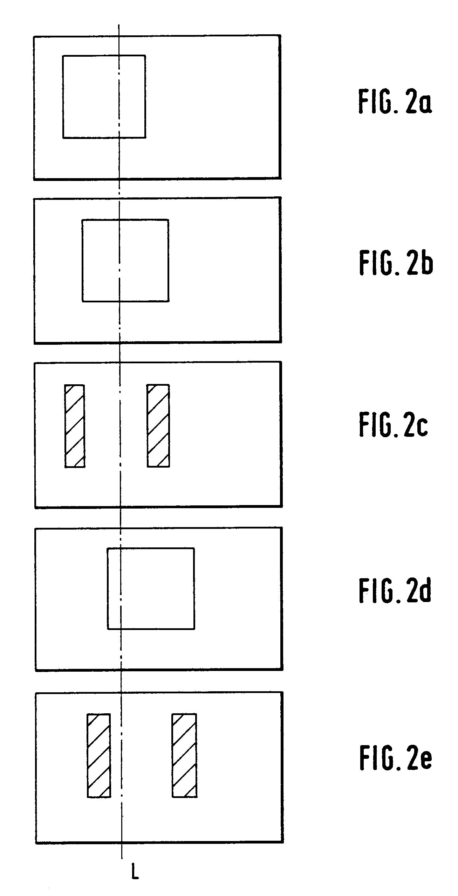

Wie bei anderen Verfahren zum Berechnen des Inhalts eines Zwischenbildes zu jeweils zwei aufeinanderfolgenden Monitorbildern sind für konkrete Berechnungen zahlreiche Sonderfälle zu beachten. Probleme, die hierbei auftreten, sollen kurz anhand der Fig. 2 und 3, jeweils a - e, erläutert werden.

In den Fig. 2 und 3 veranschaulichen die Unterfiguren a, b und d drei aufeinanderfolgende Halbbilder. Ein Rechteck bewegt sich nach rechts, z. B. ein blaues Rechteck vor rotem Hintergrund. Im Fall der Fig. 3 läuft dieses blaue Rechteck hinter einem feststehenden gelben Balken B durch. Wird nun eine Verschiebung des Rechteckes festgestellt, dürfen beim Berechnen eines Zwischenbildes keine Bildpunkte des Rechtecks in Bereiche des Balkens verschoben werden, da sonst der gelbe Balken zumindest bereichsweise blau gefärbt würde, was stark auffallen würde. Es besteht also das Problem, unterscheiden zu können, ob sich das blaue Rechteck nur vor rotem Hintergrund bewegt oder ob es zusätzlich hinter einem feststehenden Gegenstand, hier dem gelben Balken B, durchläuft. Die geometrischen Verhältnisse sind so gewählt, daß sich beim Vergleich der ersten beiden Halbbilder miteinander in beiden Fällen der Fig. 2 bzw. 3 jeweils gleiche bewegte Bereiche ergeben. Daher sind die Fig. 2c und 3c identisch. Unterschiede stellen sich jedoch beim Vergleich des jeweils zweiten mit dem jeweils dritten Halbbild ein. Dies, weil im Fall von Fig. 2 wiederum zwei bewegte Bereiche entstehen, nämlich dort, wo zunächst das Rechteck war, dann aber nicht mehr ist und dort, wo es zunächst war, sich dann aber befindet. Dies zeigt Fig. 2e. Fig. 3e weist dagegen nur einen bewegten Bereich auf, da sowohl im zweiten wie auch im dritten Halbbild die eine Kante des Rechtecks durch den Balken B verdeckt war. Daher wird im Bereich dieser Kante keinerlei Bewegung festgestellt. Daraus ist zu schließen, daß die einander zugewandten Kanten im Helligkeitsdifferenz-Bild gemäß Fig. 3c festliegende Kanten sind, während dies für die einander gegenüberliegenden Kanten der beiden bewegten Bereiche im Helligkeitsdifferenz-Bild gemäß Fig. 2c nicht gilt.

Wesentlich für die Ausführungsbeispiele ist, daß bewegte Bereiche ermittelt werden, mit Hilfe der bewegten Bereiche Kanten in den Ausgangsbildern gesucht werden und daß mit Hilfe von Punkten der Kanten untersucht wird, wie weit sich Bildpunkte nach Betrag und Richtung verschoben haben. Für Sonderfälle sind die Informationen von verschiedenen Kanten und unter Umständen auch von Punkten im Inneren eines bewegten Bereiches zu untersuchen. In allen Fällen ergibt sich aber eine im Vergleich zu herkömmlichen Verfahren stark verkürzte Rechenzeit, da nach verschobenen Punkten nur innerhalb von bewegten Bereichen gesucht wird, und diese Suche von einzelnen Kantenpunkten ausgeht.

## Patentansprüche

1. Verfahren zum Berechnen des Inhalts eines Zwischenbildes zu jeweils zwei aufeinanderfolgenden Monitorbildern, bei dem
a) für jeden Bildpunkt die Differenz der Helligkeiten in den aufeinanderfolgenden Bildern berechnet wird,
b) Zeile für Zeile im ersten der beiden Bilder untersucht wird, ob die berechnete Differenz der Helligkeiten jeweils einen Schwellenwert übersteigt, und dann, wenn dies der Fall ist, ein linker Zeilenpunkt als Anfang eines bewegten Bereichs klassifiziert wird, wenn an einer vorgegebenen Anzahl benachbarter Bildpunkte links daneben der Schwellenwert nicht überschritten wird, wohingegen ein rechter Zeilenpunkt als Ende eines bewegten Bereiches klassifiziert wird, falls rechts daneben der Schwellenwert bei einer vorgegebenen Anzahl von Bildpunkten nicht überschritten wird,
c) die Untersuchung gemäß Pkt. b) entsprechend für das zweite Bild ausgeführt wird,
d) in einem der beiden Bilder Zeile für Zeile am gemäß Pkt. b) bestimmten Anfangs- und/oder Endpunkt die Helligkeitsverteilung innerhalb eines vorgegebenen Probebereichs erfaßt wird,
e) im anderen Bild innerhalb eines vorgegebenen Suchbereichs nach im wesentlichen derselben Helligkeitsverteilung um einen Anfangs- und/oder Endpunkt gesucht wird, wie sie im vorgenannten Bild innerhalb des Probebereichs vorliegt, und
f) die Ortsdifferenz zwischen den beiden in den Schritten d) und e) ermittelten Punkten berechnet wird und mit Hilfe dieser Ortsdifferenz der Inhalt eines Zwischenbildes berechnet wird.

2. Verfahren nach Anspruch 1, **dadurch gekennzeichnet**, daß dann, wenn als Monitorbilder Halbbilder verwendet werden, die Punkte in einem der Halbbilder jeweils um eine Zeile verschoben werden, bevor Schritt a) ausgeführt wird, um den durch Übertragungsnormen bedingten Zeilenversatz zwischen zwei aufeinanderfolgenden Halbbildern auszugleichen.

3. Verfahren nach Anspruch 1, **dadurch gekennzeichnet**, daß bei der Untersuchung gemäß Schritt b) oder Schritt c) die Differenzen der Helligkeiten von mindestens drei benachbarten Bildpunkten den Schwellenwert übersteigen müssen, damit ein Punkt als Anfangs- oder Endpunkt einer Zeile eines bewegten Bereichs klassifiziert wird.

4. Verfahren nach Anspruch 1, **dadurch gekennzeichnet**, daß der Probebereich gemäß Schritt d) kreuzförmig ausgebildet ist.

5. Verfahren nach Anspruch 1, **dadurch gekennzeichnet**, daß der Suchbereich gemäß Schritt e) mehrere Bildpunkte um den jeweiligen Kantenpunkt in horizontaler Richtung und etwas weniger Punkte um diesen Kantenpunkt in vertikaler Richtung beträgt.

6. Verfahren nach Anspruch 1, **dadurch gekennzeichnet**, daß die Suche gemäß Schritt e) durch eine Kreuzkorrelationsrechnung erfolgt.

7. Verfahren nach Anspruch 1, **dadurch gekennzeichnet**, daß dann, wenn die Helligkeit eines Bildpunktbereichs vorgegebener Maximalgröße um mehr als einen vorgegebenen Betrag von der Helligkeit der benachbarten Bildpunkte abweicht, dieser Bildpunktbereich in seiner Helligkeit an die Helligkeit des umgebenden Bereichs angepaßt wird.

8. Verfahren nach Anspruch 1, **dadurch gekennzeichnet**, daß die zeilenmäßigen Lagen verschobener Bildpunkte miteinander verglichen werden und dann, wenn der Lagendifferenzwert zu den in Spaltenrichtung benachbarten verschobenen Punkten in jeweils gleicher Richtung einen vorgegebenen Schwellenwert übersteigt, die Lage des betroffenen verschobenen Punktes auf einen Lagendifferenzwert unterhalb des Schwellenwertes korrigiert wird.

## Claims

1. Method of calculating the content of an intermediate picture for two consecutive monitor pictures in each case, in which
a) the difference in the brightness in the consecutive pictures is calculated for every picture element,
b) in the first of the two pictures an investigation is made line by line as to whether the calculated difference in the brightness in each case exceeds a threshold value, and, if that is the case, a left-hand line element is classified as the beginning of a moving area if the threshold value is not exceeded at a specified number of picture elements alongside it on the left-hand side, whereas a right-hand line element is classified as the end of a moving area if the threshold value is not exceeded in the case of a specified number of picture elements next to it on the right-hand side,
c) the investigation in accordance with section b) is carried out analogously for the second picture,
d) in one of the two pictures, the brightness distribution is determined line by line within a specified sample area at the starting point and/or end point determined in accordance with Section b),
e) in the other picture, a check is made within a specified search area based on essentially the same brightness distribution around a starting point and/or end point on how said brightness distribution is present in the above-mentioned picture within the sample area, and
f) the positional difference between the two points determined in steps d) and e) is calculated and the content of an intermediate picture is calculated with the aid of said positional difference.

2. Method according to Claim 1, characterized in that, if frames are used as monitor pictures, the elements in one of the frames are in each case displaced by one line before step a) is carried out in order to compensate for the line offset between two consecutive frames which is associated with transmission standards.

3. Method according to Claim 1, characterized in that, during the investigation in accordance with step b) or step c), the difference in the brightness of at least three adjacent picture elements must exceed the threshold value for an element to be classified as starting point or end point of a line in a moving area.

4. Method according to Claim 1, characterized in that the sample area in accordance with step d) is formed in a cross shape.

5. Method according to Claim 1, characterized in that the search area in accordance with step e) amounts to a plurality of picture elements around the respective edge point in the horizontal direction and somewhat fewer elements around said edge point in the vertical direction.

6. Method according to Claim 1, characterized in that the search in accordance with step e) is carried out by a cross-correlation calculation.

7. Method according to Claim 1, characterized in that, if the brightness of a picture element area of a specified maximum size differs from the brightness of the adjacent picture elements by more than a specified amount, the brightness of said picture element area is adapted to the brightness of the surrounding area.

8. Method according to Claim 1, characterized in that the line positions of displaced picture elements are compared with one another and, if the positional difference value with respect to the displaced elements which are adjacent in the column direction exceeds a specified threshold value in the same direction in each case, the position of the displaced element concerned is corrected to a positional difference value below the threshold value.

## Revendications

1. Procédé pour calculer le contenu d'une image intermédiaire respectivement entre deux images de moniteur successives, dans lequel
a) on calcule pour chaque point d'image la différence de luminosité dans les images successives,
b) on recherche ligne par ligne dans la première des deux images si la différence de luminosité calculée dépasse une valeur seuil et, si c'est le cas, on classifie un point de ligne gauche comme le début d'une zone déplacée lorsque sur un nombre prédéterminé de points d'image voisins, la valeur seuil n'est pas dépassée à gauche de cette zone tandis qu'un point de ligne droit est classifié comme la fin d'une zone déplacée lorsque, à droite de cette zone, la valeur de seuil n'est pas dépassée sur un nombre prédéterminé de points d'image,
c) la recherche selon le point b) est menée de la même manière pour la deuxième image,
d) la répartition de luminosité à l'intérieur d'une zone d'essai prédéfinie est déterminée dans l'une des deux images, ligne par ligne sur le point de début et/ou le point de fin définis conformément au point b),
e) on recherche un point de début et/ou de fin dans l'autre image à l'intérieur d'une zone de recherche prédéterminée avec une répartition de luminosité sensiblement identique à celle de l'image préalablement mentionnée à l'intérieur de la zone d'essai, et
f) on calcule la différence de position entre les deux points définis aux étapes d) et e) et on calcule à l'aide de cette différence de position le contenu d'une image intermédiaire.

2. Procédé selon la revendication 1, **caractérisé** par le fait que lorsque les images de moniteurs utilisées sont des trames, les points dans l'une des trames sont décalés d'une ligne avant d'effectuer l'étape a) afin de compenser le déplacement de lignes entre deux trames successives dû aux normes de transmission.

3. Procédé selon la revendication 1, **caractérisé** par le fait que lors de la recherche selon l'étape b) ou c), les différences de luminosité d'au moins trois points d'image voisins doivent dépasser la valeur seuil afin qu'un point soit classifié comme point de début ou de fin d'une ligne d'une zone déplacée.

4. Procédé selon la revendication 1, **caractérisé** par le fait que la zone d'essai selon l'étape d) est cruciforme.

5. Procédé selon la revendication 1, **caractérisé** par le fait que la zone de recherche selon l'étape e) comporte plusieurs points d'image dans la direction horizontale autour du point de bord considéré et un peu moins de points dans la direction verticale autour de ce point de bord.

6. Procédé selon la revendication 1, **caractérisé** par le fait que la recherche selon l'étape e) s'effectue par un calcul de corrélation croisée.

7. Procédé selon la revendication 1, **caractérisé** par le fait que lorsque la luminosité d'une zone de point d'image de taille maximale prédéterminée diffère de plus qu'une valeur prédéfinie de la luminosité des points d'image voisins, la luminosité de cette zone de point d'image est adaptée à la luminosité de la zone environnante.

8. Procédé selon la revendication 1, **caractérisé** par le fait que les positions sur les lignes de points d'image décalés sont comparées entre elles et lorsque la différence de position par rapport aux points voisins décalés sur les colonnes respectivement dans la même direction dépasse une valeur seuil prédéterminée, la position du point décalé concerné est corrigée de manière à présenter une différence de position inférieure à la valeur seuil.
